# EUROPÄISCHE PATENTANMELDUNG

(11) **EP 3 376 086 A1**
(43) Veröffentlichungstag der Anmeldung: **19.09.2018**
(21) Anmeldenummer: 18158114.1
(22) Anmeldetag: 22.02.2018
(51) Int. Cl.: F16L 11/08, D04B 21/20, D04C 1/06, D03D 5/00, D03D 13/00, D04B 1/22

(54) **FLUIDLEITUNG MIT EINEM ÄUSSEREN TEXTILEN FESTIGKEITSTRÄGER**

(30) Priorität: 14.03.2017 DE 102017105391
(71) Anmelder: VERITAS AG, 63571 Gelnhausen (DE)
(72) Erfinder: Niesse, Michael, 63571 Gelnhausen (DE)
(74) Vertreter: Patentship Patentanwaltsgesellschaft mbH

(57) **Zusammenfassung**

Die vorliegende Erfindung betrifft eine Fluidleitung (100) zum Leiten eines Fluids, mit einem äußeren textilen Festigkeitsträger (101), welcher ausgebildet ist die Fluidleitung (100) zu verstärken, wobei der äußere textile Festigkeitsträger (101) entlang einer Längsrichtung (111) der Fluidleitung (100) und entlang einer Querrichtung (113) der Fluidleitung (100) elastisch verformbar ist; einer äußeren Zwischenschicht (103), welche innerhalb des äußeren textilen Festigkeitsträgers (101) angeordnet ist; einem inneren Festigkeitsträger (105), welcher ausgebildet ist die Fluidleitung (100) zu verstärken, wobei der innere Festigkeitsträger (105) innerhalb der äußeren Zwischenschicht (103) angeordnet ist; und einer inneren Zwischenschicht (107), welche innerhalb des inneren Festigkeitsträgers (105) angeordnet ist.

## Beschreibung

Die vorliegende Erfindung betrifft eine Fluidleitung zum Leiten eines Fluids mit einem äußeren textilen Festigkeitsträger, insbesondere eine Ladeluftleitung zum Leiten von Ladeluft mit einem äußeren textilen Festigkeitsträger.

In einem Kraftfahrzeug wird eine Vielzahl von Fluidleitungen verwendet, um Gase, wie z.B. Luft, oder Flüssigkeiten zu transportieren. Beim Betrieb eines Verbrennungsmotors in einem Kraftfahrzeug werden Fluide mit hohen Temperaturen und hohem Druck durch die entsprechenden Fluidleitungen geleitet. Beim Betrieb einer Ladeluftleitung zum Leiten von Ladeluft zu einem Verbrennungsmotor muss die Ladeluftleitung beispielsweise einer Temperatur von mehr als 230 °C und einem Druck von mehr als 3,5 bar, insbesondere von mehr als 4 bar, standhalten. In einem Kraftfahrzeug verwendete Fluidleitungen müssen somit einem hohen Druck und hohen Temperaturen widerstehen, hohen dynamischen Belastungen standhalten, eine hohe Lebensdauer aufweisen, sowie kostengünstig und reproduzierbar herstellbar sein.

In der US 2016/0168767 A1 ist eine Fluidleitung zum Leiten von Fluid offenbart, welche ein gestricktes Verstärkungsgewebe umfasst.

In der DE 10 2013 208 449 A1 ist eine Vorrichtung zur Herstellung eines Gewebes mit Kettenfäden und Schussfäden offenbart.

Es ist die der Erfindung zugrundeliegende Aufgabe, eine Fluidleitung für ein Kraftfahrzeug bereitzustellen, welche vorteilhafte mechanische Eigenschaften aufweist.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine Fluidleitung zum Leiten eines Fluids gelöst, mit einem äußeren textilen Festigkeitsträger, welcher ausgebildet ist die Fluidleitung zu verstärken, wobei der äußere textile Festigkeitsträger entlang einer Längsrichtung der Fluidleitung und entlang einer Querrichtung der Fluidleitung elastisch verformbar ist, einer äußeren Zwischenschicht, welche innerhalb des äußeren textilen Festigkeitsträgers angeordnet ist, einem inneren Festigkeitsträger, welcher ausgebildet ist die Fluidleitung zu verstärken, wobei der innere Festigkeitsträger innerhalb der äußeren Zwischenschicht angeordnet ist; und einer inneren Zwischenschicht, welche innerhalb des inneren Festigkeitsträgers angeordnet ist.

Dadurch wird beispielsweise der technische Vorteil erreicht, dass eine mechanisch stabile Fluidleitung zum Leiten von Fluid bereitgestellt wird, welche kostengünstig und reproduzierbar hergestellt werden kann. Die Fluidleitung weist einen inneren und äußeren Festigkeitsträger auf, welche benötigt werden, um den Druckanforderungen beim Leiten von heißem Fluid in einem Motorraum eines Kraftfahrzeugs widerstehen zu können.

Bei herkömmlichen Fluidleitungen mit zwei Druckträgerlagen tritt oftmals das Problem auf, dass sich aufgrund des mehrlagigen Aufbaus der Fluidleitung die Wandstärke erhöht, wodurch es oftmals zur Ausbildung einer vergleichsweise steifen Fluidleitung kommt. Herkömmlich verwendete mehrlagige Fluidleitungen werden oftmals von Hand hergestellt, wobei hierbei kalandrierte Textilgewebe-Bänder von Hand auf einen Fluidleitungsrohling aufgewickelt werden müssen, da die Textilgewebe-Bänder oftmals nachteilige elastische Eigenschaften aufweisen und deshalb nur begrenzt elastisch verformt werden können. Ein solches händisches Wickeln von nur begrenzt elastischen Textilgewebe-Bändern ist nicht nur arbeits- und kostenaufwendig, sondern führt ebenfalls zu einer geringen Reproduzierbarkeit und damit zu einer erhöhten Fehleranfälligkeit der herkömmlich hergestellten Fluidleitungen.

Der äußere textile Festigkeitsträger der gemäß dem ersten Aspekt beschriebenen Fluidleitung hingegen ist entlang einer Längsrichtung der Fluidleitung und entlang einer Querrichtung der Fluidleitung elastisch verformbar. Durch die flexible Ausbildung des äußeren textilen Festigkeitsträgers ist es nun möglich einen Fluidleitungsrohling zusammen mit dem aufgewickelten äußeren textilen Festigkeitsträger zur Vulkanisation auf einem Metalldorn zu positionieren, ohne dabei nachteilige Aufzugskräfte und Beschädigungen in dem Fluidleitungsrohling zu verursachen. Der elastisch verformbare äußere textile Festigkeitsträger kann auch nach einer Verformung um eine gewisse Länge noch wirksam Druckkräfte aufnehmen. Somit kann der äußere textile Festigkeitsträger der offenbarten Fluidleitung maschinell, z.B. durch eine Wickelmaschine, und damit automatisch auf den Fluidleitungsrohling aufgewickelt werden, wodurch sich der Arbeitsaufwand und die Fehleranfälligkeit bei der Herstellung reduziert.

Die offenbarte Fluidleitung weist ferner eine äußere Zwischenschicht auf, welche zwischen dem inneren Festigkeitsträger und dem äußeren textilen Festigkeitsträger angeordnet ist. Die äußere Zwischenschicht ermöglicht eine verbesserte Haftung zwischen dem äußeren textilen Festigkeitsträger und dem inneren Festigkeitsträger innerhalb der Fluidleitung, so dass es auch bei hohen Druckbelastungen nicht zu einer räumlichen Verlagerung des äußeren textilen Festigkeitsträgers gegenüber dem inneren Festigkeitsträger kommt. Zudem wird durch die äußere Zwischenschicht die auf den inneren Festigkeitsträger und auf den äußeren textilen Festigkeitsträger wirkenden mechanischen Belastungen reduziert, da z.B. ein Abrieb zwischen dem inneren und dem äußeren textilen Festigkeitsträger wirksam reduziert werden kann. Ferner kann durch das Anbringen der äußeren Zwischenschicht zwischen dem inneren und äußeren Festigkeitsträger die Leitungsdicke der mehrlagigen Fluidleitung reduziert werden, da die äußere Zwischenschicht mit einer geringen Dicke ausgebildet werden kann und damit gegebenenfalls auf eine außerhalb des äußeren textilen Festigkeitsträgers angeordnete Außenschicht in der Fluidleitung verzichtet werden kann.

Ferner weist die Fluidleitung eine innere Zwischenschicht auf, welche innerhalb des inneren Festigkeitsträgers angeordnet ist. Die innere Zwischenschicht umschließt den inneren Festigkeitsträger zusammen mit der äußeren Zwischenschicht und schützt dadurch den inneren Festigkeitsträger vor Beschädigungen.

Die Vorteile des elastisch verformbaren äußeren textilen Festigkeitsträgers der vorliegenden Fluidleitung umfassen eine vorteilhafte Flexibilität in Längs- und in Querrichtung, eine vorteilhafte Anpassungsfähigkeit an verschiedene Konturen, insbesondere Radien, des Fluidleitungsrohlings, ein einfaches und damit kostengünstiges und fehlerfreies Herstellen der Fluidleitung, sowie ein vorteilhaftes Aufzugsverhalten auf einen Metalldorn bei der Herstellung der Fluidleitung.

In einer vorteilhaften Ausführungsform ist der äußere textile Festigkeitsträger als ein flexibles Wickelband ausgebildet, welches auf die äußere Zwischenschicht aufgewickelt ist, wobei das flexible Wickelband kraftschlüssig und/oder stoffschlüssig an der äußeren Zwischenschicht anliegt.

Dadurch wird beispielsweise der technische Vorteil erreicht, dass ein flexibles Wickelband einfach, z.B. maschinell durch eine Wickelmaschine, auf die äußere Zwischenschicht bei der Herstellung der Fluidleitung aufgewickelt werden kann. Durch die elastische Verformbarkeit des flexiblen Wickelbands kann das flexible Wickelband schon beim Aufwickeln leicht gedehnt werden und dadurch in der Fluidleitung wirksam kraftschlüssig an der äußeren Zwischenschicht anliegen, um eine wirksame mechanische Stabilität der Fluidleitung zu gewährleisten. Während des Herstellungsverfahrens kann das flexible Wickelband ferner stoffschlüssig, z.B. durch Vernetzung, mit der äußeren Zwischenschicht verbunden werden. Somit stellt ein kraftschlüssiges und/oder stoffschlüssiges Anliegen des flexiblen Wickelbandes an der äußeren Zwischenschicht eine mechanisch stabile Fluidleitung bereit.

In einer weiteren vorteilhaften Ausführungsform ist das flexible Wickelband mehrmals umlaufend und überlappend auf die äußere Zwischenschicht entlang der Längsrichtung der Fluidleitung aufgewickelt, wobei insbesondere die Überlappungen zwischen den jeweiligen Lagen des flexiblen Wickelbands an einer Außenseite der Fluidleitung spiralförmig entlang der Längsrichtung der Fluidleitung verlaufen.

Dadurch wird beispielsweise der technische Vorteil erreicht, dass durch das mehrmals umlaufend und überlappende Wickeln des flexiblen Wickelbands auf die äußere Zwischenschicht mehrere zumindest teilweise überlappende Lagen des flexiblen Wickelbands gebildet werden, wobei die überlappenden Lagen die Schichtdicke des äußeren textilen Festigkeitsträgers im Vergleich zu einer einlagigen Ausbildung erhöhen, wodurch besonders vorteilhafte mechanische Eigenschaften der Fluidleitung sichergestellt werden können. Die Überlappungen zwischen den jeweiligen zumindest teilweise überlappenden Lagen des flexiblen Wickelbands verlaufen insbesondere spiralförmig an der Außenseite der Fluidleitung entlang der Längsrichtung der Fluidleitung. Dadurch kann sichergestellt werden, dass das mehrlagig aufgewickelte Wickelband stabil an der äußeren Zwischenschicht anliegt und auf den äußeren textilen Festigkeitsträger wirkenden mechanischen Belastungen wirksam über die gesamte Länge des äußeren textilen Festigkeitsträgers verteilt werden können.

In einer weiteren vorteilhaften Ausführungsform ist das flexible Wickelband als ein Polymer-beschichtetes, insbesondere mit Silikonkautschuk beschichtetes, flexibles Wickelband mit einer textilen Druckträgerfläche ausgebildet, wobei die textile Druckträgerfläche haftbeschichtet, insbesondere Resorcin-Formaldehyd-Latex (RFL) beschichtet ist, oder wobei die textile Druckträgerfläche nicht-haftbeschichtet ist.

Dadurch wird beispielsweise der technische Vorteil erreicht, dass ein Polymer-beschichtetes, insbesondere mit Silikonkautschuk beschichtetes, flexibles Wickelband besonders vorteilhaft mit dem zu kalandrierenden Polymer, welches insbesondere ebenfalls einen Silikonkautschuk umfasst, stoffschlüssig, insbesondere durch Vernetzung, verbunden werden kann. Ein haftbeschichtetes, insbesondere mit Resorcin-Formaldehyd-Latex (RFL) beschichtetes, flexibles Wickelband haftet besonders vorteilhaft an dem zu kalandrierenden Polymer, wodurch ebenfalls eine vorteilhafte Verbindung zwischen der äußeren Zwischenschicht und dem flexiblen Wickelband sichergestellt werden kann. Ein nichtbeschichtetes flexibles Wickelband kann einen besonders einfach zu fertigenden äußeren textilen Festigkeitsträger sicherstellen.

In einer weiteren vorteilhaften Ausführungsform weist die Fluidleitung eine Außenschicht auf, welche auf den äußeren textilen Festigkeitsträger aufgetragen ist, wobei die Außenschicht insbesondere Silikonkautschuk umfasst.

Dadurch wird beispielsweise der technische Vorteil erreicht, dass eine an dem äußeren textilen Festigkeitsträger außen anliegende Außenschicht den äußeren textilen Festigkeitsträger vorteilhaft vor von außen auf die Fluidleitung einwirkenden Einflüssen schützt. Der Silikonkautschuk ist insbesondere ausgewählt aus der Gruppe umfassend Polydimethylsiloxankautschuk (MQ), Polydimethyl/vinylmethylsiloxankautschuk (VMQ), Polydimethyl/vinylmethyl-/diphenylsiloxankautschuk (PVMQ), Poly-γ-trifluorpropyl-/vinyltrifluorpropylsiloxankautschuk (FVMQ), oder Mischungen davon, und ist insbesondere Polydimethyl/vinylmethylsiloxankautschuk (VMQ).

In einer weiteren vorteilhaften Ausführungsform weist die Fluidleitung eine Sperrschicht auf, welche ausgebildet ist eine Diffusion des Fluids durch die Sperrschicht zu reduzieren, wobei die Sperrschicht innerhalb des inneren Festigkeitsträgers angeordnet ist.

Dadurch wird beispielsweise der technische Vorteil erreicht, dass die Sperrschicht eine Diffusion des Fluids durch die Sperrschicht wirksam reduziert. Hier kann die Sperrschicht Fluorkautschuk (FKM), ein thermoplastisches Elastomer (TPE) und/oder ein thermoplastisches Elastomer-Vulkanisat (TPE-V) umfassen, insbesondere Fluorkautschuk (FKM).

In einer weiteren vorteilhaften Ausführungsform umfasst die innere und/oder äußere Zwischenschicht einen Silikonkautschuk, wobei der Silikonkautschuk insbesondere ausgewählt ist aus der Gruppe umfassend Polydimethylsiloxankautschuk (MQ), Polydimethyl/vinylmethylsiloxankautschuk (VMQ), Polydimethyl/vinylmethyl-/diphenylsiloxankautschuk (PVMQ), Poly-γ-trifluorpropyl-/vinyltrifluorpropylsiloxankautschuk (FVMQ), oder Mischungen davon.

Dadurch wird beispielsweise der technische Vorteil erreicht, dass ein Silikonkautschuk eine hohe Temperatur- und Druckbeständigkeit aufweist, sowie eine vorteilhafte Verbindung mit der Sperrschicht, dem äußeren textilen Festigkeitsträger und/oder dem inneren Festigkeitsträger ermöglicht. Insbesondere umfasst der Silikonkautschuk Polydimethyl/vinylmethylsiloxankautschuk (VMQ).

In einer weiteren vorteilhaften Ausführungsform umfasst der innere Festigkeitsträger und/oder der äußere textile Festigkeitsträger aromatische oder aliphatische Polyamid-Fasern, Polyoxadiazol-Fasern, Polyester-Fasern, Aramid-Fasern oder Mischungen davon, insbesondere meta-Aramid-Fasern.

Dadurch wird beispielsweise der technische Vorteil erreicht, dass die genannten Fasern eine hohe Temperatur- und Druckbeständigkeit aufweisen und sich vorteilhaft zu verformbaren Festigkeitsträgern verarbeiten lassen. Aufgrund der vorteilhaften mechanischen und chemischen Eigenschaften können insbesondere meta-Aramid-Fasern in dem inneren und/oder äußeren Festigkeitsträger vorteilhaft verwendet werden.

In einer weiteren vorteilhaften Ausführungsform ist der äußere textile Festigkeitsträger als ein Gestrick oder Gewirk, insbesondere als Franse, Trikot, Tuch, Satin, Samt, Atlas und/oder Köper ausgebildet, und/oder ist der innere Festigkeitsträger als ein Gestrick oder Gewirk, insbesondere als ein Rundgestrick, ausgebildet.

Dadurch wird beispielsweise der technische Vorteil erreicht, dass ein Gestrick oder Gewirk besonders vorteilhafte mechanische Eigenschaften des äußeren und/oder inneren Festigkeitsträgers sicherstellt. Gestricke und Gewirke sind Maschenwaren mit einer Vielzahl von Maschen, welche sich entlang einer Längsrichtung oder Querrichtung der Fluidleitung in dem inneren und/oder äußeren Festigkeitsträger erstrecken. In einem Gestrick sind die Maschen ineinander gehängt, wobei die jeweiligen Fäden jeweils eine Maschenreihe bilden, welche sich entlang der Querrichtung des Gestricks erstreckt. Der innere Festigkeitsträger ist insbesondere als ein Rundgestrick ausgebildet. Hierbei sind mehrere sich in der Querrichtung des Rundgestricks erstreckende Maschenreihen miteinander entlang der Längsrichtung verbunden und bilden ein sich entlang der Längsrichtung des inneren Festigkeitsträgers erstreckendes Rundgestrick.

In einem Gewirk bilden die Fäden eine Vielzahl von Maschenstäbchen, welche sich entlang der Längsrichtung des Gewirks erstrecken. Ein als Gewirk ausgebildeter Festigkeitsträger ist insbesondere als Franse, Trikot, Tuch, Satin, Samt, Atlas und/oder Köper ausgebildet.

Eine Franse beschreibt hierbei ein Gewirk, bei dem jeweils ein Faden ein sich in einer Längsrichtung des Festigkeitsträgers erstreckendes Maschenstäbchen ausbildet. Die jeweiligen Maschenstäbchen weisen hierbei keine seitliche Verbindung zu den benachbarten Maschenstäbchen auf. Eine Franse kann hierbei mit offenen oder geschlossenen Maschen ausgebildet sein.

Ein Trikot beschreibt hierbei ein Gewirk, bei dem ein sich in einer Längsrichtung des Festigkeitsträgers erstreckendes jeweiliges Maschenstäbchen aus einem Faden und einem benachbarten Faden gebildet ist. Ein Trikot kann hierbei mit offenen oder geschlossenen Maschen ausgebildet sein.

Ein Tuch beschreibt hierbei ein Gewirk, bei dem jeder maschenbildende Faden ein Maschenstäbchen überspringt und somit jedes sich in einer Längsrichtung des Festigkeitsträgers erstreckendes Maschenstäbchen aus einem Faden und einem weiteren Faden gebildet ist, wobei der weitere Faden gegenüber einem benachbarten Faden um eine Position versetzt angeordnet ist. Ein Tuch kann hierbei mit offenen oder geschlossenen Maschen ausgebildet sein.

Ein Satin beschreibt hierbei ein Gewirk, bei dem jeder maschenbildende Faden zwei Maschenstäbchen überspringt und somit jedes sich in einer Längsrichtung des Festigkeitsträgers erstreckendes Maschenstäbchen aus einem Faden und einem weiteren Faden gebildet ist, wobei der weitere Faden gegenüber einem benachbarten Faden um zwei Positionen versetzt angeordnet ist. Ein Satin kann hierbei mit offenen oder geschlossenen Maschen ausgebildet sein.

Ein Samt beschreibt hierbei ein Gewirk, bei dem jeder maschenbildende Faden drei Maschenstäbchen überspringt und somit jedes sich in einer Längsrichtung des Festigkeitsträgers erstreckendes Maschenstäbchen aus einem Faden und einem weiteren Faden gebildet ist, wobei der weitere Faden gegenüber einem benachbarten Faden um drei Positionen versetzt angeordnet ist. Ein Samt kann hierbei mit offenen oder geschlossenen Maschen ausgebildet sein.

Ein Atlas beschreibt hierbei ein Gewirk, bei dem jeder maschenbildende Faden treppenförmig bis zu einem Umkehrpunkt verläuft und dann die Richtung wechselt. Ein Atlas kann hierbei mit offenen oder geschlossenen Maschen ausgebildet sein.

Ein Köper beschreibt hierbei ein Gewirk, bei dem die Bindungen Franse, Trikot, Tuch, Satin, Samt und/oder Atlas durch einen Überlegungsversatz über zwei Nadeln abgewandelt werden, so dass die Bindungsarten "Köperfranse", "Körpertrikot", "Köpertuch", "Köpersatin", "Köpersamt", und/oder "Köperatlas" gebildet werden. Ein Köper kann hierbei mit offenen oder geschlossenen Maschen ausgebildet sein.

In einer weiteren vorteilhaften Ausführungsform ist der äußere textile Festigkeitsträger als ein Trikot mit offenen Maschen oder als ein Tuch mit offenen Maschen ausgebildet, wodurch vorteilhafte mechanische Eigenschaften des äußeren textilen Festigkeitsträgers erreicht werden können.

In einer weiteren vorteilhaften Ausführungsform umfasst der äußere textile Festigkeitsträger Kettenfäden, welche sich entlang einer Längsrichtung des äußeren textilen Festigkeitsträgers erstrecken, wobei die Kettenfäden sich entlang der Längsrichtung des äußeren textilen Festigkeitsträgers erstreckende Maschenstäbchen bilden, wobei eine Vielzahl der Maschenstäbchen entlang einer sich quer zu der Längsrichtung erstreckenden Querrichtung des äußeren textilen Festigkeitsträgers nebeneinander in dem äußeren textilen Festigkeitsträger angeordnet ist, und wobei der äußere textile Festigkeitsträger Schussfäden umfasst, welche die Kettenfäden kreuzen, um die nebeneinander in dem äußeren textilen Festigkeitsträger angeordneten Maschenstäbchen zu verbinden.

Dadurch wird beispielsweise der technische Vorteil erreicht, dass durch die aus den Kettenfäden gebildeten Maschenstäbchen, welche durch die Schussfäden wirksam verbunden sind vorteilhafte mechanische Eigenschaften des äußeren textilen Festigkeitsträgers sichergestellt werden. Die Anordnung der Kettenfäden und der Schussfäden stellt die elastische Verformbarkeit des äußeren textilen Festigkeitsträgers sicher, da die Kettenfäden und Schussfäden eine Fadenreserve aufweisen und dadurch bei einer auf den äußeren textilen Festigkeitsträger wirkenden Zugbelastung kontrahiert werden können.

In einer weiteren vorteilhaften Ausführungsform umfassen die Schussfäden erste Schussfäden, welche sich entlang der Längsrichtung des äußeren textilen Festigkeitsträgers erstrecken und welche jeweils zwei nebeneinander angeordnete Kettenfäden miteinander verbinden, wobei sich die ersten Schussfäden insbesondere wellenförmig entlang der Längsrichtung des äußeren textilen Festigkeitsträgers erstrecken, und/oder wobei die Schussfäden zweite Schussfäden umfassen, welche sich über die gesamte Breite des äußeren textilen Festigkeitsträgers erstrecken und welche alle in der Querrichtung des äußeren textilen Festigkeitsträgers nebeneinander angeordneten Maschenstäbchen miteinander verbinden, und wobei sich die zweiten Schussfäden insbesondere in einem diagonalen Zick-Zack-Muster entlang der Längsrichtung des äußeren textilen Festigkeitsträgers erstrecken.

Dadurch wird beispielsweise der technische Vorteil erreicht, dass die ersten und zweiten Schussfäden sowohl eine hohe mechanische Stabilität als auch eine vorteilhafte elastische Verformbarkeit des äußeren textilen Festigkeitsträgers sicherstellen. Wird beispielsweise der äußere textile Festigkeitsträger entlang der Längsrichtung des äußeren textilen Festigkeitsträgers gedehnt, werden die Maschenstäbchen und damit die Kettenfäden entlang der Längsrichtung ebenfalls gedehnt. Die ersten und zweiten Schussfäden werden hierbei ebenfalls entlang der Längsrichtung gedehnt, wobei die ersten und zweiten Schussfäden hierbei jedoch entlang der Querrichtung des äußeren textilen Festigkeitsträgers gespannt werden und somit die jeweiligen Maschenstäbchen entlang der Querrichtung zusammenziehen. Dadurch wird bei einer Dehnung in Längsrichtung des äußeren textilen Festigkeitsträgers der äußere textile Festigkeitsträger nicht in Querrichtung aufgeweitet, sondern vielmehr kontrahiert, so dass der äußere textile Festigkeitsträger weiterhin einen vorteilhaften Druckwiderstand aufweist.

In einer weiteren vorteilhaften Ausführungsform ist der äußere textile Festigkeitsträger als ein Textilgewebe ausgebildet, welches Kettenfäden umfasst, welche sich entlang einer Längsrichtung des äußeren textilen Festigkeitsträgers erstrecken, wobei die Kettenfäden entlang einer sich quer zu der Längsrichtung erstreckenden Querrichtung des äußeren textilen Festigkeitsträgers nebeneinander angeordnet sind, wobei der äußere textile Festigkeitsträger Diagonalschussfäden umfasst, welche sich entlang einer sich diagonal zu der Längsrichtung und der Querrichtung erstreckenden Diagonalrichtung des äußeren textilen Festigkeitsträgers erstrecken, um die nebeneinander in dem äußeren textilen Festigkeitsträger angeordneten Kettenfäden zu verbinden, wobei die Diagonalschussfäden und die Kettenfäden einen Diagonalwinkel bilden, und wobei der Diagonalwinkel einen Bereich zwischen 20° und 70°, insbesondere 45°, umfasst.

Dadurch wird beispielsweise der technische Vorteil erreicht, dass die Diagonalschussfäden sowohl eine mechanische Stabilität als auch eine vorteilhafte elastische Verformbarkeit des äußeren textilen Festigkeitsträgers sicherstellen. Durch die diagonale Anordnung der Diagonalschussfäden in einer Diagonalrichtung diagonal zur Kettenfadenrichtung wird eine besonders hohe Querflexibiltät des äußeren textilen Festigkeitsträgers sichergestellt.

In einer weiteren vorteilhaften Ausführungsform umfasst der äußere textile Festigkeitsträger Drehergewebe-Kettenfäden, welche an Querrändern des äußeren textilen Festigkeitsträgers angeordnet sind, und wobei sich die Drehergewebe-Kettenfäden entlang einer Längsrichtung des äußeren textilen Festigkeitsträgers erstrecken.

Dadurch wird beispielsweise der technische Vorteil erreicht, dass die Drehergewebe-Kettenfäden des diagonalen äußeren textilen Festigkeitsträgers einen wirksamen Schutz der Querränder vor einem Auffransen und somit dem Abstehen einzelner Fäden bilden und zudem eine definierte Breite des äußeren textilen Festigkeitsträgers bereitstellen.

In einer weiteren vorteilhaften Ausführungsform ist der äußere textile Festigkeitsträger entlang der Längsrichtung des äußeren textilen Festigkeitsträgers elastisch verformbar, um die Länge des äußeren textilen Festigkeitsträgers um eine Längsdistanz zu vergrößern.

Dadurch wird beispielsweise der technische Vorteil erreicht, dass eine Verformung des äußeren textilen Festigkeitsträgers um die Längsdistanz ein vorteilhaftes Aufbringen des äußeren textilen Festigkeitsträgers auf die äußere Zwischenschicht ermöglicht. Der um die Längsdistanz verformte aufgebrachte äußere textile Festigkeitsträger weist dennoch eine hohe und vorteilhafte Widerstandsfähigkeit gegenüber Druckbelastungen auf.

In einer weiteren vorteilhaften Ausführungsform ist die Fluidleitung als ein Formschlauch ausgebildet.

Dadurch wird beispielsweise der technische Vorteil erreicht, dass eine als ein Formschlauch ausgebildete Fluidleitung besonders vorteilhaft hergestellt werden, und an die räumlichen Beschränkungen in dem entsprechenden Bauraum durch eine spezifische Formgebung angepasst werden kann.

In einer weiteren vorteilhaften Ausführungsform weist die Fluidleitung einen weiteren äußeren Festigkeitsträger auf, welcher auf den äußeren textilen Festigkeitsträger aufgewickelt ist, wobei der weitere äußere textile Festigkeitsträger ausgebildet ist, die Fluidleitung zu verstärken, und wobei der weitere äußere textile Festigkeitsträger entlang einer Längsrichtung der Fluidleitung und entlang einer Querrichtung der Fluidleitung elastisch verformbar ist.

Dadurch wird beispielsweise der technische Vorteil erreicht, dass das Aufbringen eines weiteren äußeren textilen Festigkeitsträgers, welches außen an dem äußeren textilen Festigkeitsträger anliegt, eine besonders wirksame mechanische Stabilisierung der Fluidleitung durch zwei aneinander anliegende äußere textile Festigkeitsträger sicherstellt.

Gemäß einem zweiten Aspekt der Erfindung wird die Aufgabe durch ein Verfahren zum Herstellen einer Fluidleitung zum Leiten eines Fluids gelöst, wobei das Verfahren die folgenden Schritte umfasst, Extrudieren einer inneren Zwischenschicht, Aufbringen eines inneren Festigkeitsträgers auf die innere Zwischenschicht, wobei der innere Festigkeitsträger ausgebildet ist die Fluidleitung zu verstärken, Extrudieren einer äußeren Zwischenschicht auf den inneren Festigkeitsträger, und Wickeln eines äußeren textilen Festigkeitsträgers auf die äußere Zwischenschicht, wobei der äußere textile Festigkeitsträger ausgebildet ist, die Fluidleitung zu verstärken, und wobei der äußere textile Festigkeitsträger entlang einer Längsrichtung der Fluidleitung und entlang einer Querrichtung der Fluidleitung elastisch verformbar ist, und wobei das Wickeln des äußeren textilen Festigkeitsträgers auf die äußere Zwischenschicht insbesondere maschinell durchgeführt wird.

Dadurch wird beispielsweise der technische Vorteil erreicht, dass eine mechanisch stabile Fluidleitung hergestellt werden kann, welche hohen Temperatur- und Druckbelastungen widerstehen kann. Durch die maschinelle Durchführung des Wickelns des äußeren textilen Festigkeitsträgers auf die äußere Zwischenschicht, insbesondere durch eine Wickelmaschine, kann die Herstellung der Fluidleitung vereinfacht und weniger fehleranfällig gestaltet werden.

In einer weiteren vorteilhaften Ausführungsform umfasst das Verfahren die folgenden Schritte, Extrudieren eines Stützdorns zum Stützen einer an dem Stützdorn herstellbaren Fluidleitung; Extrudieren einer Sperrschicht an dem Stützdorn, wobei die Sperrschicht ausgebildet ist eine Diffusion des Fluids durch die Sperrschicht zu reduzieren, Extrudieren einer inneren Zwischenschicht auf die Sperrschicht, Aufbringen eines inneren Festigkeitsträgers auf die innere Zwischenschicht, wobei der innere Festigkeitsträger ausgebildet ist die Fluidleitung zu verstärken, Extrudieren einer äußeren Zwischenschicht auf den inneren Festigkeitsträger; und Wickeln eines äußeren textilen Festigkeitsträgers auf die äußere Zwischenschicht wobei der äußere textile Festigkeitsträger ausgebildet ist, die Fluidleitung zu verstärken, und wobei der äußere textile Festigkeitsträger entlang einer Längsrichtung der Fluidleitung und entlang einer Querrichtung der Fluidleitung elastisch verformbar ist, und wobei das Wickeln des äußeren textilen Festigkeitsträgers auf die äußere Zwischenschicht insbesondere maschinell durchgeführt wird.

Dadurch wird beispielsweise der technische Vorteil erreicht, dass die innere Zwischenschicht zwischen der Sperrschicht und dem inneren Festigkeitsträger sicherstellt, dass eine wirksame Verbindung zwischen den Schichten besteht und die Schichten wirksam vor mechanischen Belastungen geschützt sind.

Ausführungsbeispiele der Erfindung sind in den Zeichnungen dargestellt und werden im Folgenden näher beschrieben.

Es zeigen:
- Fig. 1: eine perspektivische Ansicht einer Fluidleitung umfassend einen äußeren Festigkeitsträger;
- Fig. 2: ein äußerer, gewirkter textiler Festigkeitsträger einer Fluidleitung gemäß einer ersten Ausführungsform;
- Fig. 3: ein äußeres textiles Festigkeitsträgergewebe einer Fluidleitung gemäß einer zweiten Ausführungsform; und
- Fig. 4: ein Verfahren zum Herstellen einer Fluidleitung.

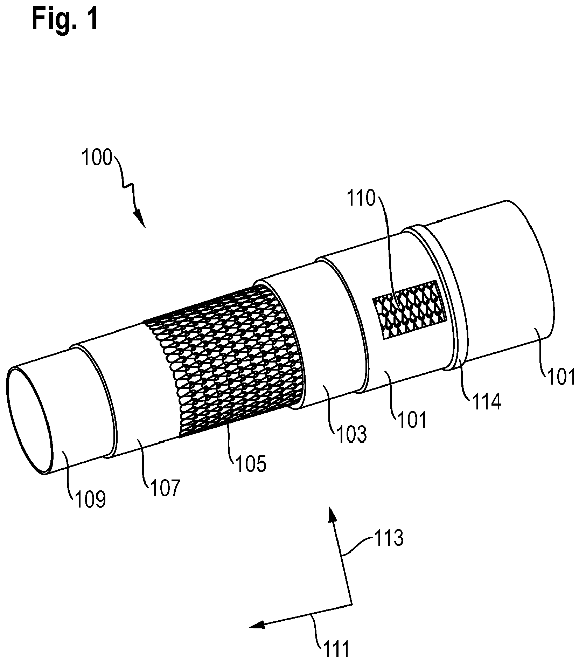

Fig. 1 zeigt eine perspektivische Ansicht einer Fluidleitung umfassend einen äußeren textilen Festigkeitsträger. Die Fluidleitung 100 umfasst insbesondere eine Ladeluftleitung zum Leiten von Ladeluft. Um eine vorteilhafte Zufuhr von Ladeluft zu einem Verbrennungsmotor eines Kraftfahrzeuges zu gewährleisten muss die Fluidleitung 100 in dem Motorraum des Kraftfahrzeuges Temperaturen von mehr als 230 °C und einem Druck von mehr als 3,5 bar, insbesondere von mehr als 4 bar, widerstehen können. Zudem muss die Fluidleitung 100 hohen dynamischen Belastungen standhalten, eine hohe Lebensdauer aufweisen, sowie kostengünstig und reproduzierbar herzustellen sein.

Um einem Druck von mehr als 3,5 bar, insbesondere von mehr als 4 bar, zu widerstehen, benötigt die Fluidleitung 100 zwei Festigkeitsträger. Herkömmliche Fluidleitungen 100 mit zwei Druckträgern oder mehreren Lagen weisen oftmals eine erhöhte Wandstärke auf und sind oftmals sehr steif. Zudem müssen in herkömmlichen Fluidleitungen 100 die Festigkeitsträger mit Hand auf einen konturierten Dorn manuell und zeitaufwendig aufgewickelt werden, da maschinell aufgewickelte Textilgeweberänder in herkömmlichen Fluidleitungen 100 durch die hohen erforderlichen Aufziehkräfte den Fluidleitungsrohling beschädigen könnten, da diese keine ausreichende Elastizität aufweisen. Durch das händische Wickeln der Textilgeweberänder auf den Fluidleitungsrohling kommt es bei der Fertigung von herkömmlichen Fluidleitungen 100 oftmals zu einer geringen Reproduzierbarkeit der Qualität der Fluidleitungen 100.

Fig. 1 zeigt eine fünflagige Fluidleitung 100. Die Fluidleitung 100 weist einen äußeren Festigkeitsträger 101 auf, welcher ausgebildet ist, die Fluidleitung 100 zu verstärken. Die Fluidleitung 100 weist eine äußere Zwischenschicht 103 auf, welche innerhalb des äußeren textilen Festigkeitsträgers 101 angeordnet ist. Die Fluidleitung 100 weist einen inneren Festigkeitsträger 105 auf, welcher ausgebildet ist, die Fluidleitung 100 zu verstärken und welches innerhalb der äußeren Zwischenschicht 103 angeordnet ist. Die Fluidleitung 100 weist eine innere Zwischenschicht 107 auf, welche innerhalb des inneren Festigkeitsträgers 105 angeordnet ist. Die Fluidleitung 100 weist eine Sperrschicht 109 auf, welche innerhalb der inneren Zwischenschicht 107 angeordnet ist und ausgebildet ist eine Diffusion des Fluids durch die Sperrschicht 109 zu reduzieren.

Die Sperrschicht 109 reduziert eine Diffusion des in der Fluidleitung 100 geleiteten Fluids und kann Fluorkautschuk (FKM), ein thermoplastisches Elastomer (TPE) und/oder ein thermoplastisches Elastomer-Vulkanisat (TPE-V) umfassen, insbesondere Fluorkautschuk (FKM).

Die innere und äußere Zwischenschicht 107, 103 umfassen einen Silikonkautschuk, wie z.B. Polydimethylsiloxankautschuk (MQ), Polydimethyl/vinylmethylsiloxankautschuk (VMQ), Polydimethyl/vinylmethyl-/diphenylsiloxankautschuk (PVMQ), Poly-γ-trifluorpropyl-/vinyltrifluorpropylsiloxankautschuk (FVMQ), oder Mischungen davon, insbesondere VMQ. Die innere Zwischenschicht 107 stellt eine wirksame Haftung zwischen der Sperrschicht 109 und dem inneren Festigkeitsträger 105 sicher und schützt zudem den inneren Festigkeitsträger 105 und die Sperrschicht 109 vor mechanischen Beschädigungen. Die äußere Zwischenschicht 103 stellt eine wirksame Haftung zwischen dem äußeren textilen Festigkeitsträger 101 und dem inneren Festigkeitsträger 105 sicher und schützt zudem den inneren Festigkeitsträger 105 und den äußeren textilen Festigkeitsträger 101 vor mechanischen Beschädigungen.

Der innere Festigkeitsträger 105 und der äußere textile Festigkeitsträger 101 umfassen aromatische oder aliphatische Polyamid-Fasern, Polyoxadiazol-Fasern, Polyester-Fasern oder Aramid-Fasern und umfasst insbesondere meta-Aramid-Fasern, welche eine vorteilhafte mechanische Stabilität der Fluidleitung 100 sicherstellen. Hierbei ist der innere und äußere textile Festigkeitsträger 105, 101 als ein Gestrick oder ein Gewirk ausgebildet. Insbesondere ist der innere Festigkeitsträger 105 als ein Rundgestrick ausgebildet. Insbesondere ist der äußere textile Festigkeitsträger 101 als Franse, Trikot, Tuch, Satin, Samt, Atlas und/oder Köper ausgebildet.

Der in der Fig. 1 dargestellte Ausschnitt der Textilschicht 110 des äußeren textilen Festigkeitsträgers 101 verdeutlicht, dass der äußere textile Festigkeitsträger 101 insbesondere mit einer Haftbeschichtung, insbesondere einer Resorcin-Formaldehyd-Latex (RFL) Haftbeschichtung außen umschlossen ist.

Wie in der Fig. 1 nicht dargestellt ist, kann die Fluidleitung 100 optional einen weiteren äußeren Festigkeitsträger aufweisen, welcher auf den äußeren textilen Festigkeitsträger 101 aufgewickelt ist, wobei der weitere äußere Festigkeitsträger ausgebildet ist, die Fluidleitung 100 zu verstärken, und wobei der weitere äußere textile Festigkeitsträger entlang einer Längsrichtung 111 der Fluidleitung 100 und entlang einer Querrichtung 113 der Fluidleitung 100 elastisch verformbar ist;
Der äußere textile Festigkeitsträger 101 ist entlang einer Längsrichtung 111 der Fluidleitung 100 und entlang einer Querrichtung 113 der Fluidleitung 100 elastisch verformbar, wobei sich die Querrichtung 113 quer zur Längsrichtung 111 erstreckt. Dadurch kann der äußere textile Festigkeitsträger 101 vorteilhaft auf die äußere Zwischenschicht 103 in der Fluidleitung 100 aufgebracht werden.

Ein Vorteil des äußeren textilen Festigkeitsträgers 101 ist, dass der äußere textile Festigkeitsträger 101 automatisch und maschinell, z.B. durch eine Wickelmaschine, auf die Fluidleitung 100 aufgewickelt werden kann, wodurch ein gleichmäßiges und reproduzierbares Muster des äußeren textilen Festigkeitsträgers 101 sichergestellt werden kann. Durch die elastische Verformbarkeit des äußeren textilen Festigkeitsträgers 101 ist es möglich bei der Herstellung der Fluidleitung 100 den Fluidleitungsrohling zusammen mit dem äußeren textilen Festigkeitsträger 101 auf einen Metalldorn zu schieben, ohne dabei große Aufzugskräfte zu verursachen, welche den Fluidleitungsrohling beschädigen könnten.

In der in Fig. 1 dargestellten Darstellung wird der äußere textile Festigkeitsträger 101 in mehreren Lagen, bzw. Bänderschichten auf die Fluidleitung 100 aufgewickelt. Hierbei entsteht zwischen den einzelnen Lagen, bzw. Bänderschichten, eine Überlappung 114.

Ein weiterer Vorteil des äußeren textilen Festigkeitsträgers 101 ist, dass ein bei herkömmlichen Fluidleitungen 100 eingesetztes Polyester-Schutzwickelband entfallen kann, da der äußere textile Festigkeitsträger 101 selbst bereits eine ausreichende Stabilisierung und einen ausreichenden Schutz der druckempfindlichen Fluidleitungsrohlinge bietet. Somit entfällt hierbei das nach der Lagerzeit der Fluidleitungsrohrlinge erforderliche händische Entfernen eines solchen Einweg-Schutzwickelbandes.

Der Vorteil des äußeren textilen Festigkeitsträgers 101 liegt in der elastischen Verformbarkeit entlang der Längsrichtung 111 und der Querrichtung 113 der Fluidleitung 100. Wird der äußere textile Festigkeitsträger 101 um eine Längsdistanz in der Längsrichtung 111 verformt wird dennoch eine gleichzeitige wirksame Aufnahme von Druckkräften durch die Fluidleitung 100 sichergestellt. Möglich wird dies durch die in dem äußeren textilen Festigkeitsträger 101 miteinander vorteilhaft verbundenen Kettenfäden und Schussfäden, welche im entspannten Zustand vorteilhafte Flexibilität gewährleistet und unter Zugbelastung hohen Druckbelastungen standhalten können.

Somit zeigt der als Gewirk oder Gestrick ausgebildete äußere textile Festigkeitsträger 101 eine sehr hohe elastische Verformbarkeit und damit Flexibilität entlang der Längsrichtung 111 und der Querrichtung 113 der Fluidleitung 100. Damit kann der äußere textile Festigkeitsträger 101 vorteilhaft an verschiedene Konturen, z.B. Radien, des Fluidleitungsrohlings angepasst werden. Dadurch ergibt sich ein einfaches und damit preisgünstiges Herstellungsverfahren, da ein gutes Aufziehverhalten des Fluidleitungsrohlings auf den Metalldorn sichergestellt wird.

Die Anwendung ermöglicht die Ausbildung eines äußeren textilen Festigkeitsträgers 101 als ein flexibles Wickelband, welches auf die äußere Zwischenschicht 103 aufgewickelt ist und kraftschlüssig und/oder stoffschlüssig an der äußeren Zwischenschicht 103 anliegt. Das flexible Wickelband kann hierbei ein Polymer-beschichtetes, insbesondere ein mit Silikonkautschuk beschichtetes, flexibles Wickelband umfassen, das eine textile Druckträgerfläche beinhaltet, welche haftbeschichtet ist, und insbesondere eine mit Resorcin-Formaldehyd-Latex (RFL) beschichtetes, flexibles Wickelband oder ein nichtbeschichtetes flexibles Wickelband umfasst.

Das flexible Wickelband kann hierbei mehrmals umlaufend und überlappend auf die äußere Zwischenschicht 103 entlang der Längsrichtung 111 der Fluidleitung 100 aufgewickelt werden, wobei hierbei insbesondere die Überlappungen 114 zwischen den jeweiligen Lagen des flexiblen Wickelbands an einer Außenseite der Fluidleitung 100 spiralförmig entlang der Längsrichtung 111 der Fluidleitung 100 verlaufen.

Wie in Fig. 1 nicht dargestellt kann die Fluidleitung 100, beispielsweise auch als eine sechslagige Fluidleitung 100 ausgebildet sein, umfassend eine Sperrschicht 109, insbesondere aus FKM, eine sich an die Sperrschicht 109 außen anschließende innere Zwischenschicht 107, insbesondere aus VMQ, einen sich an die innere Zwischenschicht 107 außen anschließenden inneren Festigkeitsträger 105, insbesondere ein Rundgestrick aus meta-Aramid, eine sich an den inneren Festigkeitsträger 105 außen anschließende zweite äußere Zwischenschicht 103 mit optional reduzierter Schichtstärke und optionaler niedrigviskoser Funktion als Haftbrücke, insbesondere aus VMQ, einen sich an die äußere Zwischenschicht 103 außen anschließenden äußeren Festigkeitsträger 101, welcher eine textile Fläche umfasst, die optional nicht beschichtet oder haftbeschichtet ist, insbesondere Resorcin-Formaldehyd-Latex (RFL) beschichtet ist, und eine sich an den äußeren textilen Festigkeitsträger 101 außen anschließende Außenschicht, insbesondere aus VMQ.

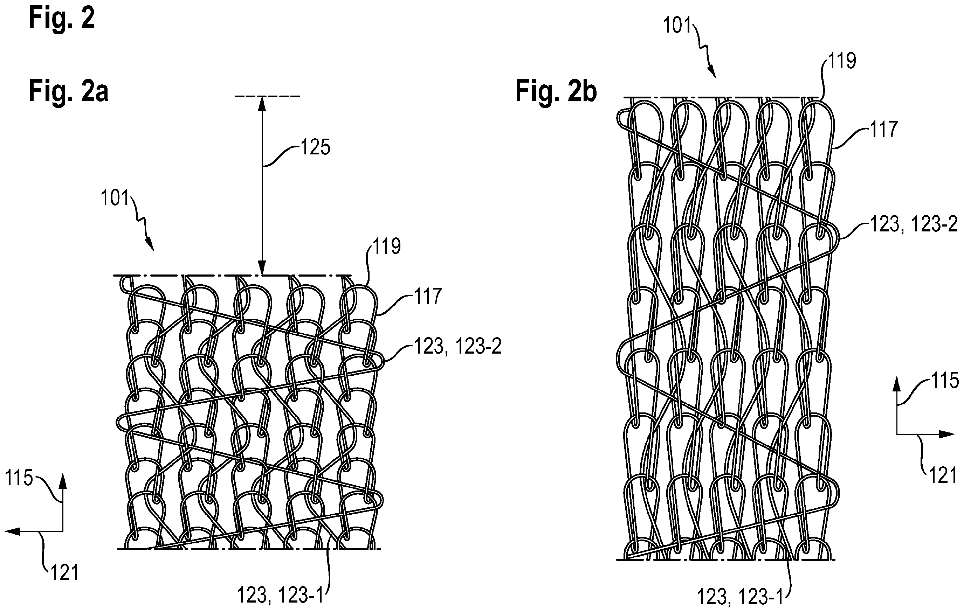

Fig. 2 zeigt einen äußeren gewirkten textilen Festigkeitsträger einer Fluidleitung gemäß einer ersten Ausführungsform. Fig. 2a zeigt den äußeren textilen Festigkeitsträger 101 im entspannten Zustand. Fig. 2b zeigt den äußeren textilen Festigkeitsträger 101 unter Zugbeanspruchung entlang einer Längsrichtung 115 des äußeren textilen Festigkeitsträgers 101.

Der in Fig. 2a und Fig. 2b dargestellte äußere textile Festigkeitsträger 101 ist als Bindungsart Franse ausgebildet. Der äußere textile Festigkeitsträger 101 kann jedoch alternativ als Trikot, Tuch, Satin, Samt, Atlas und/oder Köper ausgebildet sein, jeweils mit offenen oder geschlossenen Maschen. Vorteilhafterweise kann der äußere textile Festigkeitsträger 101 hierbei als ein Trikot mit offenen Maschen oder als ein Tuch mit offenen Maschen ausgebildet sein.

Der in Fig. 2a und Fig. 2b dargestellte äußere textile Festigkeitsträger 101 umfasst Kettenfäden 117, welche sich entlang einer Längsrichtung 115 des äußeren textilen Festigkeitsträgers 101 erstrecken und Maschenstäbchen 119 bilden, welche sich ebenfalls in der Längsrichtung 115 des äußeren textilen Festigkeitsträgers 101 erstrecken. In Fig. 2a und Fig. 2b ist jeweils die obere offene Franse eines Maschenstäbchens 119 des äußeren textilen Festigkeitsträgers 101 mit dem Bezugszeichen 119 gekennzeichnet. Eine Vielzahl von Maschenstäbchen 119 sind entlang einer sich quer zur Längsrichtung 115 erstreckenden Querrichtung 121 des äußeren textilen Festigkeitsträgers 101 nebeneinander in dem äußeren textilen Festigkeitsträger 101 angeordnet.

Der in Fig. 2a und Fig. 2b dargestellte äußere textile Festigkeitsträger 101 umfasst ferner Schussfäden 123, welche die Kettenfäden 117 kreuzen, um die nebeneinander in dem äußeren textilen Festigkeitsträger 101 angeordneten Maschenstäbchen 119 zu verbinden.

Die Schussfäden 123 umfassen hierbei erste Schussfäden 123-1, welche sich entlang der Längsrichtung 115 des äußeren textilen Festigkeitsträgers 101 erstrecken und welche jeweils zwei nebeneinander angeordnete Kettenfäden 117 miteinander verbinden. Die ersten Schussfäden 123-1 bilden somit in dem äußeren textilen Festigkeitsträger 101 einen sogenannten Teilschuss und erstrecken sich wellenförmig entlang der Längsrichtung 115 des äußeren textilen Festigkeitsträgers 101.

Die Schussfäden 123 umfassen hierbei zweite Schussfäden 123-2, welche sich über die gesamte Breite des äußeren textilen Festigkeitsträgers 101 erstrecken und alle in Querrichtung 121 nebeneinander angeordneten Maschenstäbchen 119 miteinander verbinden. Die zweiten Schussfäden 123-2 bilden somit in dem äußeren textilen Festigkeitsträger 101 einen sogenannten Vollschuss und erstrecken sich in einem diagonalen Zick-Zack-Muster entlang der Längsrichtung 115 des äußeren textilen Festigkeitsträgers 101.

In der Fig. 2a ist der äußere textile Festigkeitsträger 101 im entspannten Zustand gezeigt. Wenn der äußere textile Festigkeitsträger 101 unter Zugspannung steht und entlang der Längsrichtung 115 elastisch verformt wird, vergrößert sich die Länge des äußeren textilen Festigkeitsträgers 101 um eine Längsdistanz 125. Der daraus resultierende um die Längsdistanz 125 entlang der Längsrichtung 115 vergrößerte äußere textile Festigkeitsträger 101 ist in Fig. 2b dargestellt. Der als Gestrick oder Gewirk ausgebildete äußere textile Festigkeitsträger 101 bietet somit eine gewisse Fadenreserve, wodurch eine definierte Verlängerung des äußeren textilen Festigkeitsträgers 101 um die Längsdistanz 125 ermöglicht wird. Dadurch kann sich der äußere textile Festigkeitsträger 101 sehr gut an die inneren und äußeren Radien einer Fluidleitungskonstruktion anpassen.

Ein wichtiger Vorteil des elastisch verformbaren äußeren textilen Festigkeitsträgers 101 liegt darin, dass nach dem Verlängern des äußeren textilen Festigkeitsträgers 101 um die definierte Längsdistanz 125 Druckkräfte dennoch wirksam durch den äußeren textilen Festigkeitsträger 101 aufgenommen werden können. Dies wird durch die Führung der ersten Schussfäden 123-1, welche einen Teilschuss bilden, und durch die Führung der zweiten Schussfäden 123-2, welche einen Vollschuss bilden, ermöglicht. Somit bietet der äußere textile Festigkeitsträger 101 im in Fig. 2a dargestellten entspannten Zustand eine besonders vorteilhafte Flexibilität und im in Fig. 2b dargestellten gespannten Zustand einen besonders vorteilhaften Widerstand gegenüber Druckbelastungen.

Der in Fig. 2a und Fig. 2b dargestellte äußere textile Festigkeitsträger 101 ermöglicht eine kostengünstige Herstellung einer Fluidleitung 100, da der Aufwickelvorgang des äußeren textilen Festigkeitsträgers 101 maschinell erfolgt und nach der Produktion kein zusätzliches Schutzband außen auf den äußeren textilen Festigkeitsträger 101 aufgebracht werden muss. Ferner ist durch die automatische Herstellung die Qualität der hergestellten Fluidleitungen 100 reproduzierbar und damit weniger fehleranfällig. Es kann zudem eine Reduzierung der Schichtstärke der Fluidleitung 100 und damit eine Materialeinsparung ermöglicht werden, da der äußere textile Festigkeitsträger 101 mit einer nicht vulkanisierten Polymer-Beschichtung oder Haftbeschichtung versehen werden kann und somit gegebenenfalls auf eine Außenschicht in der Fluidleitung 100 verzichtet werden kann. Es erhöht sich ferner die Lebensdauer und Druckperformance der Fluidleitung 100, insbesondere des Ladeluftschlauches.

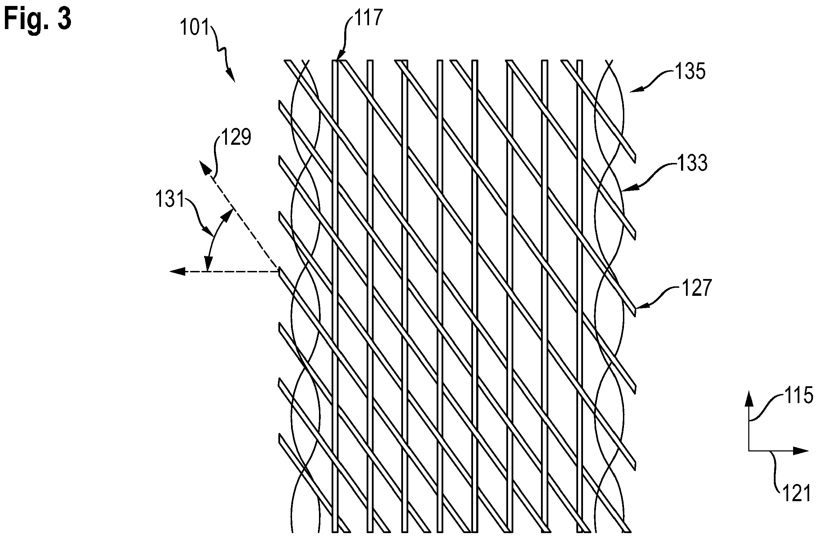

Fig. 3 zeigt ein äußeres textiles Festigkeitsträgergewebe einer Fluidleitung gemäß einer zweiten Ausführungsform. Der äußere textile Festigkeitsträger 101 ist als ein Textilgewebe ausgebildet und umfasst hierbei Kettenfäden 117, welche sich entlang einer Längsrichtung 115 des äußeren textilen Festigkeitsträgers 101 erstrecken. Die einzelnen Kettenfäden 117 sind hierbei entlang einer sich quer zur Längsrichtung 115 erstreckenden Querrichtung 121 des äußeren textilen Festigkeitsträgers 101 nebeneinander angeordnet.

Der äußere textile Festigkeitsträger 101 umfasst Diagonalschussfäden 127, welche sich in einer diagonal zu der Längsrichtung 115 und zu der Querrichtung 121 erstreckenden Diagonalrichtung 129 des äußeren textilen Festigkeitsträgers 101 erstrecken, um die nebeneinander in dem äußeren textilen Festigkeitsträger 101 angeordneten Kettenfäden 117 zu verbinden, wobei die Diagonalschussfäden 127 und die Kettenfäden 117 einen Diagonalwinkel 131 bilden, wobei der Diagonalwinkel 131 einen Bereich zwischen 20° und 70°, insbesondere 45°, umfasst.

Der als Diagonalgewebe ausgebildete äußere textile Festigkeitsträger 101 bietet den Vorteil, dass die Kettenfäden 117 und die Diagonalschussfäden 127 nicht rechtwinklig zueinander stehen, sondern in einem Winkel zwischen 20° und 70°, insbesondere 45°, angeordnet sind. Eine solche Konstruktion bietet ebenfalls einen sehr flexiblen äußeren textilen Festigkeitsträger 101 im Vergleich zu konventionellen Geweben.

Bei der Herstellung eines solchen konventionellen Diagonalgewebes wird die breite Webware zunächst einseitig kalandriert und diagonal in Streifen geschnitten, so dass ein scheinbarer diagonaler Schuss-, bzw. Kettenfadenversatz von 20° und 70°, insbesondere 45°, vorliegt. Diese Teilschnitte werden dann wieder zusammengelegt und mittels eines weiteren Kalandriervorgangs wieder zusammengefügt. Aus diesem Gelege mit Gewebe-Überlappungsstellen, bzw. Unterbrechungen im Gewebegefüge werden dann die manuell zu verarbeitenden Wickelbänder geschnitten. Der besondere Vorteil eines neuartigen Diagonalgewebewickelbandes liegt in der genau einstellbaren Diagonalversatzgradzahl der Diagonalschussfäden 127 zu den Kettenfäden 117 als auch in dem unterbrechungsfreiem Gewebegefüge.

Der äußere textile Festigkeitsträger 101 kann Drehergewebe-Kettenfäden 133 umfassen, welche an den Querrändern 135 des äußeren textilen Festigkeitsträgers 101 angeordnet sind und sich entlang der Längsrichtung 115 des äußeren textilen Festigkeitsträgers 101 erstrecken. Die Drehergewebe-Kettenfäden 133 fixieren den äußeren textilen Festigkeitsträger 101 an den Querrändern 135 in einer verschiebefesten Art und Weise.

Auf der Diagonalwebmaschine können somit gleich mehrere Wickelbänder nebeneinander in voller Webbreite gewebt werden, anschließend als breite Webwaren kalandriert werden und erst danach zugeschnitten werden. Die Schnittstelle ergibt sich dann aus zwei nebeneinander liegenden Drehergewebe-Kettenfäden 133. Der Vorteil des als Diagonalgewebe ausgebildeten äußeren textilen Festigkeitsträgers 101 zeigt sich durch eine sehr hohe Querflexibilität diagonal zu der Richtung der Kettenfäden 117. Die Schutzdrehergewebekante bietet einen guten Schutz gegen Auffransen und somit Abstehen einzelner Fäden, sowie eine definierte Bandbreite. Zudem gibt es keine Unterbrechungen im Gewebegefüge.

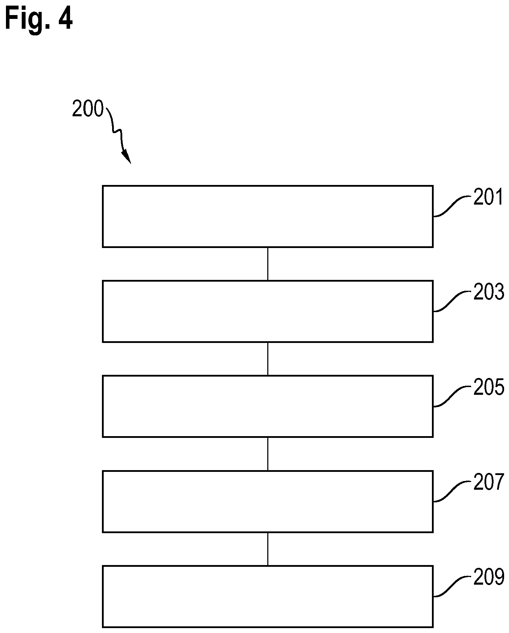

Fig. 4 zeigt ein Verfahren zum Herstellen einer Fluidleitung. Das Verfahren 200 umfasst als ersten optionalen Schritt das Extrudieren 201 einer Sperrschicht 109 an dem Stützdorn, wobei die Sperrschicht 109 ausgebildet ist eine Diffusion des Fluids durch die Sperrschicht 109 zu reduzieren. Das Verfahren 200 umfasst als zweiten Schritt das Extrudieren 203 einer inneren Zwischenschicht 107 auf die Sperrschicht 109. Das Verfahren 200 umfasst als dritten Schritt das Aufbringen 205 eines inneren Festigkeitsträgers 105 auf die innere Zwischenschicht 107, wobei der innere Festigkeitsträger 105 ausgebildet ist die Fluidleitung 100 zu verstärken. Das Verfahren 200 umfasst als vierten Schritt das Extrudieren 207 einer äußeren Zwischenschicht 103 auf den inneren Festigkeitsträger 105. Das Verfahren 200 umfasst als fünften Schritt das Wickeln 209 eines äußeren textilen Festigkeitsträgers 101 auf die äußere Zwischenschicht 103, wobei der äußere textile Festigkeitsträger 101 ausgebildet ist, die Fluidleitung 100 zu verstärken, und wobei der äußere textile Festigkeitsträger 101 entlang einer Längsrichtung 111 der Fluidleitung 100 und entlang einer Querrichtung 113 der Fluidleitung 100 elastisch verformbar ist, und wobei das Wickeln 209 des äußeren textilen Festigkeitsträgers 101 auf die äußere Zwischenschicht 103 insbesondere maschinell durchgeführt wird.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidleitung
- 101: Äußerer textiler Festigkeitsträger
- 103: Äußere Zwischenschicht
- 105: Innerer Festigkeitsträger
- 107: Innere Zwischenschicht
- 109: Sperrschicht
- 110: Textilschicht des äußeren textilen Festigkeitsträgers
- 111: Längsrichtung der Fluidleitung
- 113: Querrichtung der Fluidleitung
- 114: Überlappung
- 115: Längsrichtung des äußeren textilen Festigkeitsträgers
- 117: Kettenfäden
- 119: Maschenstäbchen
- 121: Querrichtung des äußeren textilen Festigkeitsträgers
- 123: Schussfäden
- 123-1: Erste Schussfäden
- 123-2: Zweite Schussfäden
- 125: Längsdistanz
- 127: Diagonalschussfäden
- 129: Diagonalrichtung
- 131: Diagonalwinkel
- 133: Drehergewebe-Kettenfäden
- 135: Querrand des Festigkeitsträgers
- 200: Verfahren zum Herstellen einer Fluidleitung
- 201: Extrudieren einer Sperrschicht
- 203: Extrudieren einer inneren Zwischenschicht
- 205: Aufbringen eines inneren Festigkeitsträgers
- 207: Extrudieren einer äußeren Zwischenschicht
- 209: Wickeln eines äußeren textilen Festigkeitsträgers

## Patentansprüche

1. Fluidleitung (100) zum Leiten eines Fluids, mit:
einem äußeren textilen Festigkeitsträger (101), welcher ausgebildet ist die Fluidleitung (100) zu verstärken, wobei der äußere textile Festigkeitsträger (101) entlang einer Längsrichtung (111) der Fluidleitung (100) und entlang einer Querrichtung (113) der Fluidleitung (100) elastisch verformbar ist;
einer äußeren Zwischenschicht (103), welche innerhalb des äußeren textilen Festigkeitsträgers (101) angeordnet ist;
einem inneren Festigkeitsträger (105), welcher ausgebildet ist die Fluidleitung (100) zu verstärken, wobei der innere Festigkeitsträger (105) innerhalb der äußeren Zwischenschicht (103) angeordnet ist; und
einer inneren Zwischenschicht (107), welche innerhalb des inneren Festigkeitsträgers (105) angeordnet ist.

2. Fluidleitung (100) nach Anspruch 1, wobei der äußere textile Festigkeitsträger (101) als ein flexibles Wickelband ausgebildet ist, welches auf die äußere Zwischenschicht (103) aufgewickelt ist, wobei das flexible Wickelband kraftschlüssig und/oder stoffschlüssig an der äußeren Zwischenschicht (103) anliegt.

3. Fluidleitung (100) nach Anspruch 2, wobei das flexible Wickelband mehrmals umlaufend und überlappend auf die äußere Zwischenschicht (103) entlang der Längsrichtung (111) der Fluidleitung (100) aufgewickelt ist, und wobei insbesondere die Überlappungen (114) zwischen den jeweiligen Lagen des flexiblen Wickelbands an einer Außenseite der Fluidleitung (100) spiralförmig entlang der Längsrichtung (111) der Fluidleitung (100) verlaufen.

4. Fluidleitung (100) nach Anspruch 2 oder 3, wobei das flexible Wickelband als ein Polymer-beschichtetes, insbesondere mit Silikonkautschuk beschichtetes, flexibles Wickelband mit einer textilen Druckträgerfläche ausgebildet ist, wobei die textile Druckträgerfläche haftbeschichtet, insbesondere Resorcin-Formaldehyd-Latex (RFL) beschichtet ist, oder wobei die textile Druckträgerfläche nicht-haftbeschichtet ist.

5. Fluidleitung (100) nach einem der vorangehenden Ansprüche, wobei die Fluidleitung (100) eine Außenschicht aufweist, welche auf den äußeren textilen Festigkeitsträger (101) aufgetragen ist, wobei die Außenschicht insbesondere Silikonkautschuk umfasst.

6. Fluidleitung (100) nach einem der vorangehenden Ansprüche, wobei die Fluidleitung (100) eine Sperrschicht (109) aufweist, welche ausgebildet ist eine Diffusion des Fluids durch die Sperrschicht (109) zu reduzieren, wobei die Sperrschicht (109) innerhalb des inneren Festigkeitsträgers (105) angeordnet ist.

7. Fluidleitung (100) nach einem der vorangehenden Ansprüche, wobei die innere und/oder äußere Zwischenschicht (107, 103) einen Silikonkautschuk umfasst, und wobei der Silikonkautschuk insbesondere ausgewählt ist aus der Gruppe umfassend Polydimethylsiloxankautschuk (MQ), Polydimethyl/vinylmethylsiloxankautschuk (VMQ), Polydimethyl/vinylmethyl-/diphenylsiloxankautschuk (PVMQ), Poly-γ-trifluorpropyl-/vinyltrifluorpropylsiloxankautschuk (FVMQ), oder Mischungen davon.

8. Fluidleitung (100) nach einem der vorangehenden Ansprüche, wobei der innere Festigkeitsträger (105) und/oder der äußere textile Festigkeitsträger (101) aromatische oder aliphatische Polyamid-Fasern, Polyoxadiazol-Fasern, Polyester-Fasern, Aramid-Fasern oder Mischungen davon umfassen, insbesondere meta-Aramid-Fasern umfasst.

9. Fluidleitung (100) nach einem der vorangehenden Ansprüche, wobei der äußere textile Festigkeitsträger (101) als ein Gestrick oder Gewirk, insbesondere als Franse, Trikot, Tuch, Satin, Samt, Atlas und/oder Köper ausgebildet ist, und/oder wobei der innere Festigkeitsträger (105) als ein Gestrick oder Gewirk, insbesondere als ein Rundgestrick, ausgebildet ist.

10. Fluidleitung (100) nach einem der vorangehenden Ansprüche, wobei der äußere textile Festigkeitsträger (101) Kettenfäden (117) umfasst, welche sich entlang einer Längsrichtung (115) des äußeren textilen Festigkeitsträgers (101) erstrecken, wobei die Kettenfäden (117) sich entlang der Längsrichtung (115) des äußeren textilen Festigkeitsträgers (101) erstreckende Maschenstäbchen (119) bilden,
wobei eine Vielzahl der Maschenstäbchen (119) entlang einer sich quer zu der Längsrichtung (115) erstreckenden Querrichtung (121) des äußeren textilen Festigkeitsträgers (101) nebeneinander in dem äußeren textilen Festigkeitsträger (101) angeordnet ist, und
wobei der äußere textile Festigkeitsträger (101) Schussfäden (123) umfasst, welche die Kettenfäden (117) kreuzen, um die nebeneinander in dem äußeren textilen Festigkeitsträger (101) angeordneten Maschenstäbchen (119) zu verbinden.

11. Fluidleitung (100) nach Anspruch 10, wobei die Schussfäden (123) erste Schussfäden (123-1) umfassen, welche sich entlang der Längsrichtung (115) des äußeren textilen Festigkeitsträgers (101) erstrecken und welche jeweils zwei nebeneinander angeordnete Kettenfäden (117) miteinander verbinden, wobei sich die ersten Schussfäden (123-1) insbesondere wellenförmig entlang der Längsrichtung (115) des äußeren textilen Festigkeitsträgers (101) erstrecken, und/oder
wobei die Schussfäden (123) zweite Schussfäden (123-2) umfassen, welche sich über die gesamte Breite des äußeren textilen Festigkeitsträgers (101) erstrecken und welche alle in der Querrichtung (121) des äußeren textilen Festigkeitsträgers (101) nebeneinander angeordneten Maschenstäbchen (119) miteinander verbinden, und wobei sich die zweiten Schussfäden (123-2) insbesondere in einem diagonalen Zick-Zack-Muster entlang der Längsrichtung (115) des äußeren textilen Festigkeitsträgers (101) erstrecken.

12. Fluidleitung (100) nach einem der Ansprüche 1 bis 8, wobei der äußere textile Festigkeitsträger (101) als ein Textilgewebe ausgebildet ist, welches Kettenfäden (117) umfasst, welche sich entlang einer Längsrichtung (115) des äußeren textilen Festigkeitsträgers (101) erstrecken, wobei die Kettenfäden (117) entlang einer sich quer zu der Längsrichtung (115) erstreckenden Querrichtung (121) des äußeren textilen Festigkeitsträgers (101) nebeneinander angeordnet sind,
wobei der äußere textile Festigkeitsträger (101) Diagonalschussfäden (127) umfasst, welche sich entlang einer sich diagonal zu der Längsrichtung (115) und der Querrichtung (121) erstreckenden Diagonalrichtung (129) des äußeren textilen Festigkeitsträgers (101) erstrecken, um die nebeneinander in dem äußeren textilen Festigkeitsträger (101) angeordneten Kettenfäden (117) zu verbinden,
wobei die Diagonalschussfäden (127) und die Kettenfäden (117) einen Diagonalwinkel (131) bilden, und wobei der Diagonalwinkel (131) einen Bereich zwischen 20° und 70°, insbesondere 45°, umfasst.

13. Fluidleitung (100) nach Anspruch 12, wobei der äußere textile Festigkeitsträger (101) Drehergewebe-Kettenfäden (133) umfasst, welche an Querrändern (135) des äußeren textilen Festigkeitsträgers (101) angeordnet sind, und wobei sich die Drehergewebe-Kettenfäden (133) entlang einer Längsrichtung (115) des äußeren textilen Festigkeitsträgers (101) erstrecken.

14. Verfahren (200) zum Herstellen einer Fluidleitung (100) zum Leiten eines Fluids, umfassend die folgenden Schritte:
Extrudieren (203) einer inneren Zwischenschicht (107);
Aufbringen (205) eines inneren Festigkeitsträgers (105) auf die innere Zwischenschicht (105), wobei der innere Festigkeitsträger (105) ausgebildet ist die Fluidleitung (100) zu verstärken;
Extrudieren (207) einer äußeren Zwischenschicht (103) auf den inneren Festigkeitsträger (105); und
Wickeln (209) eines äußeren textilen Festigkeitsträgers (101) auf die äußere Zwischenschicht (103), wobei der äußere textile Festigkeitsträger (101) ausgebildet ist, die Fluidleitung (100) zu verstärken, und wobei der äußere textile Festigkeitsträger (101) entlang einer Längsrichtung (111) der Fluidleitung (100) und entlang einer Querrichtung (113) der Fluidleitung (100) elastisch verformbar ist, und wobei das Wickeln (209) des äußeren textilen Festigkeitsträgers (101) auf die äußere Zwischenschicht (103) insbesondere maschinell durchgeführt wird.

15. Verfahren (200) nach Anspruch 14, umfassend die folgenden Schritte:
Extrudieren eines Stützdorns zum Stützen einer an dem Stützdorn herstellbaren Fluidleitung (100);
Extrudieren (201) einer Sperrschicht (109) auf den Stützdorn, wobei die Sperrschicht (109) ausgebildet ist eine Diffusion des Fluids durch die Sperrschicht (109) zu reduzieren;
Extrudieren (203) einer inneren Zwischenschicht (107) auf die Sperrschicht (109);
Aufbringen (205) eines inneren Festigkeitsträgers (105) auf die innere Zwischenschicht (107), wobei der innere Festigkeitsträger (105) ausgebildet ist die Fluidleitung (100) zu verstärken;
Extrudieren (207) einer äußeren Zwischenschicht (103) auf den inneren Festigkeitsträger (105); und
Wickeln (209) eines äußeren textilen Festigkeitsträgers (101) auf die äußere Zwischenschicht (103), wobei der äußere textile Festigkeitsträger (101) ausgebildet ist, die Fluidleitung (100) zu verstärken, und wobei der äußere textile Festigkeitsträger (101) entlang einer Längsrichtung (111) der Fluidleitung (100) und entlang einer Querrichtung (113) der Fluidleitung (100) elastisch verformbar ist, und wobei das Wickeln (209) des äußeren textilen Festigkeitsträgers (101) auf die äußere Zwischenschicht (103) insbesondere maschinell durchgeführt wird.
